# EUROPÄISCHE PATENTSCHRIFT

(11) **EP 1 425 515 B1**
(45) Veröffentlichungstag und Bekanntmachung des Hinweises auf die Patenterteilung: **13.04.2005**
(21) Anmeldenummer: 02779271.2
(22) Anmeldetag: 22.08.2002
(51) Int. Cl.: F16C 1/00, F16C 33/12

(54) **PLEUELLAGERSCHALE- ODER -BUCHSE ODER HAUPTLAGERSCHALE**
BIG-END BEARING SHELL OR BUSHING OR MAIN BEARING SHELL
COQUILLE DE COUSSINET DE BIELLE OU COQUILLE DE PALIER PRINCIPAL

(30) Priorität: 08.09.2001 DE 10144126
(43) Veröffentlichungstag der Anmeldung: 09.06.2004
(73) Patentinhaber: KS Gleitlager GmbH, 68789 St. Leon-Rot (DE)
(72) Erfinder: SCHUBERT, Werner, 69168 Wiesloch (DE)
(74) Vertreter: Friz, Oliver
(86) Internationale Anmeldenummer: PCT/EP2002/009380
(87) Internationale Veröffentlichungsnummer: WO 2003/023241

(56) Entgegenhaltungen:
- EP-A- 1 158 062
- DE-A- 19 801 074
- GB-A- 572 472
- DATABASE CAPLUS [Online] CHEMICAL ABSTRACTS SERVICE, COLUMBUS, OHIO, US; retrieved from STN Database accession no. 1994:13103 XP002234150 & JP 05 230566 A (MITSUBISHI MATERIALS CORP) 7. September 1993 (1993-09-07)

## Beschreibung

Die Erfindung betrifft eine Pleuellagerschale oder -buchse bei Verbrennungsmotoren oder eine Hauptlagerschale zur Lagerung der Kurbelwelle bei Verbrennungsmotoren, aus einem Gleitlagerverbundwerkstoff mit einer metallischen, insbesondere aus Stahl gebildeten Stützschicht und einer darauf aufgebrachten metallischen Gleitschicht.

Die Anforderungen an Pleulellagerelemente, nämlich an den Kurbelzapfen einer Kurbelwelle umschließende Pleuellagerschalen und den Kolbenbolzen umschließende, in das kleine Pleuellager einpressbare Pleuellagerbuchsen, sind vielfältig. Zum einen wird für die Pleuellagerschalen die Beständigkeit auch bei hohen Gleitgeschwindigkeiten und mittleren Belastungen gefordert, zum anderen wird bei Pleuellagerbuchsen die Beständigkeit bei hohen Belastungen und demgegenüber höheren Temperaturen, jedoch bei geringen bis moderaten Gleitgeschwindigkeiten gefordert. Die Anforderungen an Hauptlagerschalen für Kurbelwellen sind geprägt durch die dort auftretende gegenüber Pleuellagerschalen geringere Belastung und die hohe Gleitgeschwindigkeit bei verhältnismäßig moderaten Temperaturen. Hauptlagerschalen müssen zudem im Stande sein, Fluchtungsfehler der Kurbelwelle auszugleichen.

Durch die Anmelderin sind Pleuellagerbuchsen für die Verwendung im kleinen Pleuelauge eines Motorpleuels bekannt geworden, deren Gleitschicht von einer Kupferzinklegierung mit einem verhältnismäßig hohen Zinkanteil von etwa 30 Gew.-% und mit 2 Gew.-% Mangan, 2 Gew.-% Nickel, 2 Gew.-% Aluminium und 1,8 Gew.-% Eisen besteht.

Aus EP 1 158 062 A1 ist ein Kupfer-Zink-Aluminium-Knetwerkstoff sowie dessen Verwendung zur Herstellung von Lagerbuchsen für Pleuel und Kolben in Verbrennungsmotoren bekannt. Der Werkstoff besteht aus 63,5 bis 66,5 Gew.-% Kupfer, 2,0 bis 5,4 Gew.-% Aluminium, 4,1 bis 4,9 Gew.-% Mangan, 2,6 bis 3,4 Gew.-% Eisen, 1,1 bis 1,9 Gew.-% Nickel, Rest Zink und übliche Verunreinigungen. Aus den Ausführungsbeispielen ergibt sich ein Zinkgehalt von 20 bzw. 22 Gew.-%.

Aus DE 44 11 762 A1 ist ein Gleitlagerverbundwerkstoff bekannt, bei dem auf eine Stützschicht aus Stahl eine Kupfer-Zink-Knetlegierung mit hohem Zinkgehalt von 28 bis 32 Gew.-% durch Walzplattieren aufgebracht ist.

DE 198 01 074 A1 offenbart einen Gleitlagerverbundwerkstoff mit einer Kupfer-Zink-Legierung, für die ein Verhältnis von α- zu β-Phase von 1,5 bis 6 vorgeschlagen wird.

CH 223 580 offenbart Kupfer-Zink-Legierungen, insbesondere für die Herstellung von auf Gleitung beanspruchten Maschinenteilen mit 2 bis 8 Gew.-% Aluminium, 0,05 bis 3 Gew.-% Silizium, 0,5 bis 10 Gew.-% Mangan und 50 bis 70 Gew.-% Kupfer. Es können in der Legierung noch bis zu 10 Gew.-% Blei und 0,1 bis 5,0 Gew.-% Eisen, Nickel und Kobalt zulegiert sein.

DE 197 28 777 C2 offenbart einen Schichtverbundwerkstoff mit einer Trägerschicht und einer Lagermetallschicht, insbesondere aus einer Kupfer-Zink-Legierung und einer galvanisch aufgebrachten bleifreien Gleitschicht auf Zinnbasis.

Hiervon ausgehend liegt der vorliegenden Erfindung die Aufgabe zugrunde, einen Gleitlagerverbundwerkstoff zu schaffen, der sich sowohl für den Einsatz als Pleuellagerschale als auch für den Einsatz als Pleuellagerbuchse und Hauptlagerschale für die Kurbelwelle eignet.

Diese Aufgabe wird erfindungsgemäß dadurch gelöst, dass die Gleitschicht der Pleuellagerschale oder Pleuellagerbuchse oder Hauptlagerschale von einer Kupfer-Zink-Legierung gebildet ist, die 10 - 25 Gew.-% Zn, 1 - 3 Gew.-% Mn, 1 - 3 Gew.-% Ni und 2 - 6 Gew.-% Fe, Rest Kupfer sowie verunreinigungsbedingte Bestandteile von jeweils maximal 0,1 Gew.-%, in der Summe bis max. 1 Gew.-% aufweist und dass die Gleitschicht ausschließlich in der α-Phase kristallisiert ist.

Es wurde festgestellt, dass sich bei Auskristallisierung der Kupfer-Zink-Legierung ausschließlich in der α-Phase ein für die genannten Anwendungen geeigneter Gleitlagerwerkstoff erhalten lässt, der sich vor allem im Hinblick auf Korrosionserscheinungen hervorragend eignet. β-Messing neigt nämlich zur selektiven Korrosion und wirkt quasi als Opferanode in dem metallischen Pleuel. Der hohe Eisengehalt wirkt verfestigend und steigert die Zähigkeit des Werkstoffs; er führt zu einer Kornfeinung und erhöht die Rekristallisierungstemperatur der Legierung. Vorzugsweise beträgt der Eisengehalt 3,5 bis 4,5 Gew.-%.

Bei der Erfindung wurde festgestellt, dass bei einer Beschränkung des Zinkgehalts bis 25 Gew.-% sich ein Gefügeaufbau erreichen lässt, der ausschließlich in der α-Phase kristallisiert ist.

Des Weiteren erweist es sich als ganz besonders vorteilhaft, wenn die Gleitschicht aus den vorstehend genannten Komponenten besteht oder aus einer Legierung besteht, die zusätzlich 1 - 3 Gew.-% Aluminium aufweist. Aluminium erhöht nämlich die Festigkeit der erfindungsgemäßen Legierung etwas.

Des Weiteren erweist es sich als vorteilhaft, wenn eine dünne, dem Gleitpartner zugewandte Overlay-Schicht auf der Gleitschicht ausgebildet ist, die eine galvanisch aufgebrachte Zinn-Schicht oder eine Zinn-Schicht mit PTFE-Einschlüssen oder eine auf eine Diffusionssperrschicht aufgesputterte Schicht aus einer Aluminium-Zinn-Legierung ist. Wenn die Overlay-Schicht als Laufschicht dienen soll, so werden Schichtdicken von über 10 µm gewählt, und wenn sie lediglich als Einlaufschicht dienen soll werden Schichtdicken von < 5 µm gewählt.

Eine bevorzugte Zusammensetzung der Gleitschicht der erfindungsgemäßen Pleuellagerschale oder Pleuellagerbuchse umfasst in gewichtsprozentualer Zusammensetzung Cu(Rest) Zn(19-21) Mn(1,5-2,5) Ni(1,5-2,5) Fe(3,5-4,5) Al(1,5-2,5) und besonders bevorzugtermaßen ist die Gleitschicht eine CuZn20Mn2Ni2Fe4A12-Legierung.

## Patentansprüche

1. Pleuellagerschale oder -buchse bei Verbrennungsmotoren oder Hauptlagerschale zur Lagerung der Kurbelwelle bei Verbrennungsmotoren, aus einem Gleitlagerverbundwerkstoff mit einer metallischen, insbesondere aus Stahl gebildeten, Stützschicht und einer darauf aufgebrachten metallischen Gleitschicht, **dadurch gekennzeichnet, dass** die Gleitschicht von einer Kupfer-Zink-Legierung gebildet ist mit 10 - 25 Gew.-% Zn, 1-3 Gew.-% Mn, 1-3 Gew.-% Ni, 2-6 Gew.-% Fe Rest Kupfer sowie mit verunreinigungsbedingten Bestandteilen von jeweils max. 0,1 Gew.-%, in der Summe bis max. 1 Gew.-%, und dass die Gleitschicht ausschließlich in der α-Phase kristallisiert ist.

2. Pleuellagerschale oder -buchse oder Hauptlagerschale nach Anspruch 1, **dadurch gekennzeichnet, dass** die Gleitschicht eine dünne dem Gleitpartner zugewandte Overlay-Schicht aufweist, die eine galvanisch aufgebrachte Schicht aus Zinn oder einer Zinnbasis-Legierung oder eine Zinn-Schicht mit PTFE-Einschlüssen oder eine auf eine Diffusionssperrschicht aufgesputterte Schicht aus einer Aluminium-Zinn-Legierung ist.

3. Pleuellagerschale oder -buchse oder Hauptlagerschale nach Anspruch 1 oder 2, **dadurch gekennzeichnet,dass** die Gleitschicht zusätzlich 1-3 Gew.-% Al aufweist.

4. Pleuellagerschale oder -buchse oder Hauptlagerschale, nach einem der vorstehenden Ansprüche, **dadurch gekennzeichnet, dass** der Eisengehalt 3,5 bis 4,5 Gew.-% beträgt.

## Claims

1. Connecting rod bearing shell or bushing for combustion engines or main bearing shell for bearing the crankshaft of internal-combustion engines, made from a sliding bearing composite material with a metallic support layer, preferably formed from steel, and a metallic sliding layer disposed thereon, **characterised in that** the sliding layer is formed by a copper zinc alloy with 10 to 25% by weight of Zn, 1 to 3% by weight of Mn, 1 to 3% by weight of Ni, 2 to 6% by weight of Fe, the rest being copper and impurities of not more than 0.1% by weight each, in total not more than 1% by weight, wherein the sliding layer is crystallised exclusively in the α phase.

2. Connecting rod bearing shell or bushing or main bearing shell according to claim 1, **characterised in that** the sliding layer has a thin overlay layer, facing the sliding partner, which is an electro-plated layer of tin or an alloy on the basis of tin or a tin layer with PTFE inclusions or a layer of an aluminium tin alloy sputtered onto a diffusion-blocking layer.

3. Connecting rod bearing shell or bushing or main bearing shell according to either claim 1 or 2, **characterised in that** the sliding layer additionally comprises 1 to 3% by weight of Al.

4. Connecting rod bearing shell or bushing or main bearing shell according to any one of the preceding claims, **characterised in that** the iron content is 3.5 to 4.5% by weight.

## Revendications

1. Coquille de coussinet de tête de bielle ou bague de pied de bielle d'un moteur à combustion ou coquille de coussinet de palier principal destinée à soutenir un vilebrequin de moteur à combustion, en matériau composite pour palier lisse avec une couche d'appui métallique, notamment en acier, et une couche de glissement métallique rapportée sur ladite couche d'appui, **caractérisée en ce que** la couche de glissement est composée d'un alliage de cuivre et de zinc contenant 10 à 25 % en poids de Zn, 1 à 3 % en poids de Mn, 1 à 3 % en poids de Ni et 2 à 6 % en poids de Fe, le reste consistant en du cuivre ainsi que des composants induits par des impuretés, dont la teneur individuelle est de 0,1 % en poids maximum et dont la teneur cumulée est de 1 % en poids maximum, et **en ce que** la couche de glissement est cristallisée exclusivement dans la phase α.

2. Coquille de coussinet de tête de bielle ou bague de pied de bielle ou coquille de coussinet de palier principal selon la revendication 1, **caractérisée en ce que** la couche de glissement présente une mince couche supérieure en regard de l'élément glissant antagoniste, ladite couche supérieure consistant en une couche d'étain ou d'alliage à base d'étain appliquée par voie électrolytique ou en une couche d'étain avec des inclusions de PTFE ou encore en une couche d'alliage aluminium/étain appliquée par pulvérisation sur une couche étanche à la diffusion.

3. Coquille de coussinet de tête de bielle ou bague de pied de bielle ou coquille de coussinet de palier principal selon la revendication 1 ou la revendication 2, **caractérisée en ce que** la couche de glissement comprend en outre 1 à 3 % en poids d'Al.

4. Coquille de coussinet de tête de bielle ou bague de pied de bielle ou coquille de coussinet de palier principal selon l'une quelconque des revendications précédentes, **caractérisée en ce que** la teneur en fer est comprise entre 3,5 et 4,5 % en poids.
